# EUROPÄISCHE PATENTSCHRIFT

(11) **EP 2 704 822 B1**
(45) Veröffentlichungstag und Bekanntmachung des Hinweises auf die Patenterteilung: **15.08.2018**
(21) Anmeldenummer: 12726015.6
(22) Anmeldetag: 03.05.2012
(51) Int. Cl.: B01J 19/12, C02F 1/48

(54) **VERFAHREN ZUR PHYSIKALISCHEN BEARBEITUNG UND/ODER ERWÄRMUNG VON MEDIEN, INSBESONDERE VON FLÜSSIGKEITEN**
METHOD FOR PHYSICALLY TREATING AND/OR HEATING MEDIA, IN PARTICULAR LIQUIDS
PROCÉDÉ DE TRAITEMENT PHYSIQUE ET/OU DE CHAUFFAGE DE MILIEUX, NOTAMMENT DE LIQUIDES

(30) Priorität: 04.05.2011 SK 342011
(43) Veröffentlichungstag der Anmeldung: 12.03.2014
(73) Patentinhaber: OKEANOS CORPORATION, Victoria, Mahe (SC)
(72) Erfinder: GREGA, Samuel, 08001 Presov (SK)
(74) Vertreter: Jeck, Anton
(86) Internationale Anmeldenummer: PCT/EP2012/001891
(87) Internationale Veröffentlichungsnummer: WO 2012/150031

(56) Entgegenhaltungen:
- WO-A1-2007/045487

## Beschreibung

Die Erfindung betrifft ein Verfahren zur physikalischen Bearbeitung und/oder Erwärmung von Flüssigkeiten nach dem Oberbegriff des Anspruchs 1. Die Vorbehandlung von flüssigen und gasförmigen Medien in Technologien, die mit Wasser sowie mit anderen chemischen Verbindungen (Methan, Alkohol, Ethanol u. a.), Elementarstoffen (reines Wasserstoffgas, gasförmiges Helium u. a.), homogenen Verbindungen (Luft, Meerwasser, Wasserlösungen, z. B. Salzlösung, Kupfervitriollösung u. a.), kolloiden Verbindungen (Milch, Blut u. a.), heterogenen Verbindungen (Suspension, Emulsion, Schaum, Aerosole) arbeiten, ist bekannt. Diese Anregungsvorrichtungen sind in der Biochemie, in petrochemischen Technologien, in chemischen Technologien u. ä. eingesetzt, bei denen die Medien organischer, anorganischer, polarer, nichtpolarer, natürlicher, synthetischer Art sind.

Die gegenwärtigen Technologien, die mit flüssigen oder gasförmigen Medien arbeiten (ob nun als mit zu verarbeitendem Material oder als Hilfsmaterial, das die technologischen Bedingungen verbessert), sind durch die Energiebindungen im Molekül und zwischen den Molekülen definiert. Davon hängt die Größe ihrer entscheidenden Eigenschaften, wie Fluidität, elektrische Leitfähigkeit, Oberflächenspannung usw., ab. Diese Technologien können wegen ihrer breiten Anwendung und ihrer hohen Anzahl im Rahmen dieser Erfindung nicht genau konkretisiert werden. Es handelt sich um Flüssigkeiten und Gase in vollem Umfang ihrer molekularen Zusammensetzung, wie z. B.: Wasser, Soda, Säure, organische und anorganische Flüssigkeiten, Kohlenwasserstoffe, insbesondere Kraftstoffe, Erdöl, Benzin, Kerosin, Mineralöle, flüssige Düngemittel usw.

Die Technologien, die mit den angeführten Medien zusammenhängen, wie z. B. Brennen, Verbrennung, Erwärmung, Kühlung, Vermischung von Medien, z. B. Homogenisierung, Erstellen von Lösungen, Kolloiden sowie Segregation, wie z. B. Destillation, Raffination, Verdampfung, Sedimentation u. ä., sind energie-, zeit- und materialaufwändig.

Die gegenwärtigen Technologien, die eine Temperaturänderung (Erwärmung, Kühlung) des Mediums erfordern, werden durch feste, flüssige und gasförmige Brennstoffe, elektrische Energie, Sonnenstrahlung, Erdwärme (Geothermie), Wärmepumpen u. ä. umgesetzt.

Der Nachteil der derzeitigen Verfahren ist der hohe Energieaufwand, wobei die Brennstoffe bei der Verbrennung negative Auswirkungen auf die Umwelt haben. Im Falle von Automobil-, Luft- und Schiffsverkehr sind die Auswirkungen noch um ein Vielfaches höher und schlimmer.

Wenn Wasser als Heizmedium oder bei der Herstellung von Dampf, z. B. für einen Turbinenantrieb, verwendet wird, benötigt dieses Medium eine komplexe Bearbeitung, um einige oder alle Elemente zu reduzieren. Auch eine mögliche Entlüftung, insbesondere wegen der Bildung von Krusten, muss vorgesehen werden. Bei dieser Bearbeitung kommt es zur Beschädigung der Oberfläche der technologischen Anlagen, der funktionalen Oberflächen von Brennkammern und der Maschinen, wie Heizkörpern, Wärmeaustauschern, Heizgeräten und Heizvorrichtungen.

Bei einer Wassererwärmung gemäß der PCT-Anmeldung WO 2007/045487 ist die Erwärmung langsam und manchmal unerwünscht. Die angeführte Lösung war Gegenstand einer weiteren Forschung, insbesondere wegen der unerwarteten Interaktionen bei der Art der Erwärmung, die auf die Änderungen im behandelten Medium ausgerichtet war. Die ermittelten physikalischen Veränderungen führten zur Verwendung in einer weiteren Implementation, wie z. B. destilliertes Wasser, demineralisiertes Wasser, geothermales Wasser, Alkohol, Öle, Gase, Erdöl, Benzin, Kerosin, Methan, Biogas und weitere Medien, die in dieser Anmeldung angeführt sind.

In der US 4 427 544 ist ein magneto-elektrochemischer Reaktor zur Wasseraufbereitung beschrieben, der an einer unmagnetischen Rohrleitung mit einem Eingang und Ausgang angeordnet ist. An der Außenseite der Rohrleitung ist eine DC-Quelle angebracht. Im Innenraum befindet sich eine rotierende Turbine, die auf ferromagnetischen Stangen angeordnet ist, die in der Rohleitung gelagert sind. Die rotierende Turbine erzeugt elektrischen Strom, der auf die Bildung von Kalk in der Rohrleitung einwirkt und an Energievorrichtungen und Wärmeaustauschern eine Schutzschicht gegen Krusteneinlagerungen bildet.

Die US 5 384 627 zeigt ein Verfahren und eine Vorrichtung zur elektrolytischen Behandlung von Werkstoffen, wobei der zu behandelnde Werkstoff in einem Elektrolyten gelagert ist, auf den ein elektromagnetisches Feld einwirkt. Auf der Oberfläche des zu behandelnden Werkstoffs löst dieses Feld elektromagnetische und elektrokinetische Kräfte aus, die fähig sind, chemische und physikalische Veränderungen in dem zu behandelnden Werkstoff zu erzeugen. Es handelt sich um einen durch einen Elektrolyten ergänzten Reaktor, der Behandlungswerkstoffe, wie Ionen, Säure, Basen u. ä. mit einem optimalen pH-Wert sowie eine abnehmende Elektrode bzw. eine Mischvorrichtung und einen Reduktor aufweist. Der Reaktor verfügt über eine Reihe von Ausführungsmöglichkeiten, wobei die abnehmende Elektrode mit einem kathodischen Metall verbunden ist. Dieses Verfahren wird für die Zementation von Oberflächen des zu behandelnden Werkstoffs verwendet.

Die US 4 061 551 zeigt ein Verfahren zur Extraktion von Gallium aus Alkalilösungen. Es handelt sich um ein Verfahren zur Gewinnung von Gallium aus Lösungen für deren weitere Verwendung, z. B. als Komponente für Halbleiterelemente von Thermometern u. ä. Es handelt sich um eine Vorrichtung, die aus einem Behälter mit einer Anode und einer flüssigen Metallkathode besteht, wobei der Elektrolyt eine Galliumlösung enthält. Ein elektromagnetisches Feld beschleunigt die Verschiebung von Gallium aus dem Alkali-Elektrolyten auf die Elektroden.

Die Anmeldung US 2007/0029261 zeigt ein Verfahren und eine Vorrichtung zur Wasseraufbereitung durch elektromagnetische Wellen zwecks Kalkentfernung. Es handelt sich um einen Teil einer Rohrleitung mit einer elektromagnetischen Induktionswindung, die an die Quelle des elektromagnetischen Signals angeschlossen ist. Im Inneren der Rohrleitung wird das elektromagnetische Feld erzeugt.

Die DE 888537 zeigt ein Verfahren zur Trennung von Feststoffen aus Lösungen, um die Bildung von Ablagerungen auf den Wärme- und Kühlkörpern in Zusammenwirkung mit einer Anode und einer Kathode zu vermeiden. Die Technologie wird unter der Wirkung von Magneten umgesetzt, deren magnetische Felder, ob nun gleichstromige oder wechselnde, erzeugt oder durch Permanentmagnet (Dauermagnet) gebildet werden. In einer alternativen Ausführung ist die Wirkung mit einem Hochfrequenzfeld ergänzt.

Die GB 2 433 267 zeigt eine Vorrichtung mit einem elektrostatischen, elektromagnetischen Feld und einem Induktionsfeld. Es handelt sich um eine elektrostatische Reduktionsvorrichtung mit einem kombinierten elektromagnetischen Generator, der an eine Windung angeschlossen ist. Die Windung ist an der Außenseite am ganzen Umfang eines Behälters gebildet, in dem ein Reaktant angeordnet ist. Der AC-Generator ist im Behälter an die AC-Elektrode angeschlossen. Der AC-Generator ist mit dem Boden des Behälters verbunden, wobei der Reaktant flüssigen als auch festen Aggregatzustand aufweist.

Die MD 4055 zeigt ein Verfahren und eine Vorrichtung zur Enthärtung von natürlichem Mineralwasser. In der Vorrichtung befindet sich eine separate Kammer zur Wasserbeeinflussung durch eine hohle Kathode mit Wassereintritt. Die Kathode ist an einer Windung angeordnet, die an einen Konverter, eine Quelle von Hochfrequenz-Magnetimpulsen, angeschlossen ist. Das durch die Kathode behandelte Wasser kann durch ein Ventil ausgelassen werden. Es kann aber auch an ihrem Außenumfang in Gegenrichtung strömen und über einen zweiten kontinuierlichen Ausgang ausgelassen werden. Zwischen der Anode und der Kathode befindet sich eine Keramikmembrane, wobei eine separate Anodenkammer ihren eigenen Eingang und Ausgang hat und an den Pluspol einer Gleichstromquelle angeschlossen ist. Der Minuspol der Gleichstromquelle ist an die Kathode angeschlossen. Ferner beschreibt die Lösung die Parameter für die elektrochemische Behandlung des Mineralwassers in dieser Vorrichtung.

Durch WO 2007/045487 ist ein Verfahren zur physikalischen Bearbeitung und/oder Erwärmung von Medien, insbesondere von Flüssigkeiten bekannt, wobei das Medium ganz oder nur ein Teil davon einer Ionisation und/oder einer Polarisation und gleichzeitig einer elektromagnetischen Wechselwirkung ausgesetzt wird oder mehrmals einer solchen Wirkung ausgesetzt wird.

Das gemeinsame Ziel der genannten Dokumente ist eine Vorbeugung gegen eine Krustenbildung an den Rohrleitungen durch Einwirkung von magnetischem bzw. elektromagnetischem Feld auf das Wasser in Zusammenwirkung mit statischen oder sich bewegenden Komponenten in Strömungsrichtung. Eine weitere Gruppe von Dokumenten betrifft die Änderungen bei der Aufnahme von negativen und positiven Ionen durch Elektroden bzw. den zu behandelnden Werkstoff mit einer Anreicherung der Oberfläche um diese Elemente mit dem Ziel, eine Zementation oder Bildung einer Antioxidations-Schutzschicht bzw. Wiedergewinnung von Elementen aus den Lösungen (Elektrolyten) zu erreichen.

Ziel der Erfindung ist die Bearbeitung des Mediums, ob nun in flüssigem und gasförmigem Zustand, um Kraft- und Energieveränderungen im Molekül und zwischen dem Molekül und dem Medium zu ändern, die die Ursache für physikalische und/oder chemische Eigenschaften des Mediums sind.

Das Wesen der Erfindung besteht darin, dass das hydrodynamisch bearbeitete Medium in flüssigem und gasförmigem Zustand polaren und/oder ionisch elektrochemischen Potentialen sowie elektrochemischen Signalen RC AC ausgesetzt wird. Dabei ist es ausreichend, wenn vor den physikalischen, biologischen, chemischen, biochemischen und anderen Technologien mindestens ein Teil des Mediums derart vorbehandelt wird.

Zusätzlich wird das bearbeitete Medium mit der Wirkung von Laser als einer weiteren Energieart angereichert, die entweder direkt im Körper oder außerhalb des Körpers angeordnet ist.

Nach einer Weiterbildung ist vorgesehen, dass vor den physikalischen, biologischen, chemischen, biochemischen und anderen Technologien der ganze Inhalt des Mediums in einer Anregungsvorrichtung bearbeitet wird. Die beste Methode für die Bearbeitung sieht vor, dass das Medium mehr als einmal bis mehrmals durch den Körper der Anregungsvorrichtung gezielt durchgeleitet wird. Das Wesen der Erfindung besteht weiterhin darin, dass in dem Körper der Anregungsvorrichtung mindestens eine gesteuerte Elektrode mit einer Frequenzquelle verbunden ist. Diese Frequenzquelle ist an eine Energiequelle angeschlossen. In der Richtung der erzwungenen Strömung des behandelten Mediums oder durch die von Temperaturänderungen ausgelöste Strömung ohne erzwungene Strömung folgt ein Polarisations- und/oder lonisationsraum, der aus verschiedenen elektrochemischen Potentialen gebildet ist. Technisch am Einfachsten ist es, wenn diese elektrochemischen Potentiale an einem Körper mit normalen Dimensionen an seinem Innenumfang und/oder an seiner Achse gebildet werden. Der Vorteil dieses Verfahrens zur physikalischen Bearbeitung, der Anregungsvorrichtung und deren Anschluss besteht in der Erhöhung der physikalischen Veränderungen und deren Steuerung bzw. der Beschleunigung der Erwärmung und Erweiterung der Implementierung der Anregungsvorrichtung in Technologien, bei denen es unerwartete Wirkungen bringt, wenn man das Verfahren z. B. für die Erwärmung als interaktiven Knoten verwendet. Dann beschleunigt die Anregungsvorrichtung in Verbindung mit den konventionellen Technologien die Erwärmung und erhöht die Leistung der Heizvorrichtungen (Kessel) und reduziert die E-missionsbelastung, was positive Auswirkungen auf die Umwelt hat. In Kombination mit anderen Technologien wirkt sie als Katalysator, insbesondere auf dem Gebiet der organischen und anorganischen Chemie, Petrochemie, Erdgas-, Erdöl- und Brennstoffverarbeitung, bei der Herstellung von Papier, bei der Wasserreinigung, in der Energiewirtschaft u. ä. Die angeführte Wirkung wird dadurch erreicht, dass die Bindungen im Molekül und zwischen dem Molekül und dem Medium verändert werden, wobei sie im Falle von Flüssigkeiten ihre Fluidität und Oberflächenspannung verändert, ähnlich wie auch bei Gasen. Sie werden dadurch dünner und weisen schwächere Bindungen auf, was zur Änderung ihrer physikalischen und chemischen Eigenschaften (Wärmeinhalt/Enthalpie ändert sich), wie z. B. Verdampfen, Erwärmung, Kühlung, Trocknen, Vermischen u. ä. sowie zu Änderungen der chemischen, physikalischen, biologischen und bioenergetischen Reaktionen führt.

Die Erfindung wird anhand der beiliegenden Zeichnungen näher erläutert. Es zeigen:
- Fig. 1: schematisch eine Anregungsvorrichtung für Flüssigkeiten und Gase,
- Fig. 2: eine in das Reinigungsmodul eines Rohrsystems eingebaute Anregungsvorrichtung,
- Fig. 3: eine Anregungsvorrichtung mit Wärmetauscher und konventionellem Heizmodul,
- Fig. 4: eine Anschlussvariante der Anregungsvorrichtung an Rohrleitungen mit großem Durchmesser,
- Fig. 5: eine Anschlussvariante der Anregungsvorrichtung an eine Kammer mit Mischvorrichtung eines Rückverteilers,
- Fig. 6: eine Anschlussvariante der Anregungsvorrichtung an eine Kammer mit biologischen, chemischen und anderen technologischen Vorrichtungen,
- Fig. 7: eine Grundausführung des Körpers, bei dem die negative Elektrode mit dem Medium in Kontakt steht,
- Fig. 8: eine Variante, bei der die negative Elektrode nur an einem Teil des Körpers angeordnet ist,
- Fig. 9: eine Variante mit sekundärer negativer Elektrode mit verschiedenen Potentialen,
- Fig. 10: eine Variante mit einer Isolierschicht zwischen der negativen und sekundären negativen Elektrode,
- Fig. 11: eine Variante mit unterschiedlicher negativer Elektrode,
- Fig. 12: eine Variante mit dem Bezug der negativen Elektrode zu der gesteuerten Elektrode, die von der positiven Elektrode und dem Medium getrennt sind,
- Fig. 13 und 13A: ein Großvolumen-Heizgerät mit einer gesteuerten Elektrode und einer positiven Elektrode in zwei Varianten,
- Fig. 14: die Aneinanderreihung von mehreren Anregungsvorrichtungen,
- Fig. 15: ein Blockschema der Anregungsvorrichtung in einem Fahrzeug mit einer Transportvorrichtung für das Medium,
- Fig. 16: eine Variante zur Anregungsvorrichtung nach Fig. 15 und

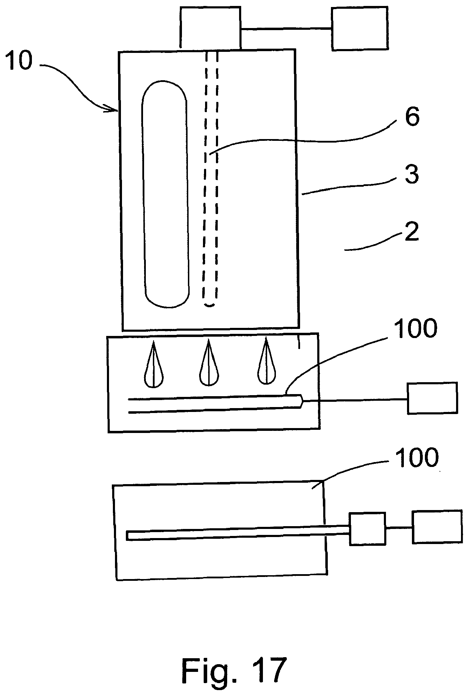

- Fig. 17: eine Variante mit vertikaler Ausrichtung der Elektroden.

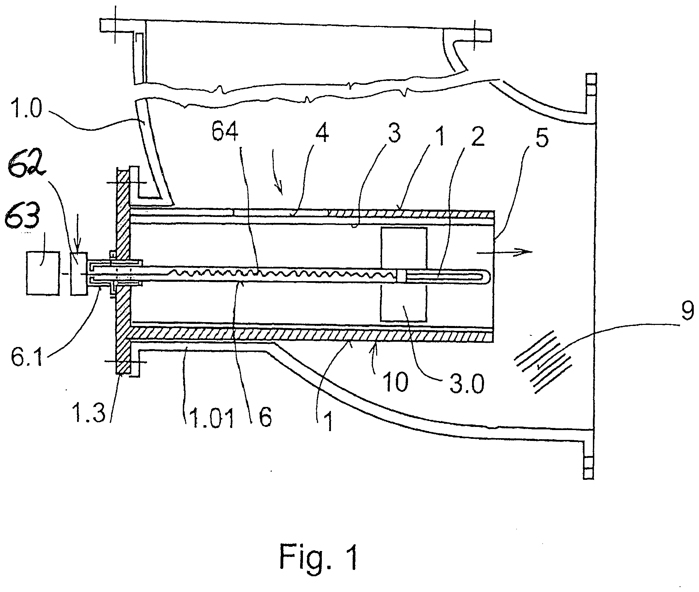

Die Erfindung wird anhand eines in der Fig. 1 dargestellten Ausführungsbeispiels einer Anregungsvorrichtung näher erläutert.

Eine Anregungsvorrichtung 10 für Flüssigkeiten und Gase weist in einem Körper 1 mindestens eine gesteuerte Elektrode 6 auf, die mit einer an eine Energiequelle 63 angeschlossene Frequenzquelle 62 verbunden ist.

In der Richtung der erzwungenen Strömung eines behandelten Mediums 9 oder durch eine von Temperaturänderungen ausgelöste Strömung ohne erzwungene Strömung folgt ein Polarisations- und/oder Ionisationsraum, der aus verschiedenen elektrochemischen Potentialen gebildet ist. Technisch am Einfachsten ist es, wenn diese elektrochemischen Potentiale bei dem Körper 1 mit normalen Dimensionen an seinem Innenumfang und an seiner Achse gebildet sind. Die Anregungsvorrichtung 10 für Flüssigkeiten und Gase gemäß der Erfindung bearbeitet nur einen Teil oder das ganze Volumen des Mediums 9 mit physikalischen Mitteln, wie etwa mit elektrochemischen Signalen RC AC und mit unterschiedlichen elektrochemischen Potentialen im Körper bei einer hydrodynamischen Strömung des Mediums im Körper polar und/oder nichtpolar - ionisch, was die Änderungsart im Medium 9 bestimmt. Wenn das elektrochemische Potential, das sich im Körper 1 befindet, an seiner Oberfläche eine Isolierschicht aufweist, z. B. 3.0, 2.1., z. B. in Form von Silikat, Teflon, PP- und PPR-Folie oder eine aufgetragene Schicht z. B. im Vakuum, handelt es sich um eine polarisierende Wirkung. Wenn diese Isolierschicht nur ein Teil des elektrochemischen Potentials der Elektroden ist und ein Teil ihrer Fläche in Kontakt mit dem behandelten Medium 9 ist, handelt es sich um eine ionisierende Wirkung. Die dargestellte Aktivierungs-Anregungsvorrichtung 10 für Flüssigkeiten und Gase ist anschließend in ein bestehendes altes Rohrsystem eingesetzt. Bei einer Änderung der Strömung ist vorzugsweise direkt im Bogen 1.0 von dessen Achse oder in der Nähe nachträglich ein Flansch befestigt, in den Bogen 1.0 ist ein Körper 1 aus Isoliermaterial, wie z. B. Polyethylen, Polypropylen, Glas, Silikatkeramik oder auch Werkstoff mit elektrochemischen Potential gleich Null (Platin), zerlegbar befestigt. Eine Durchgangsöffnung des Körpers 1, vorzugsweise mit einer runden Form, ist durch eine Verschlussplatte 1.3 aus Isoliermaterial geschlossen. An der Stelle der Strömung des Mediums 9 weist der Körper 1 seitlich eine Eingangsöffnung 4 und in der Achse eine Ausgangsöffnung 5 auf. An seiner Innenfläche weist der Körper 1 in dem konkreten Ausführungsbeispiel eine negative Elektrode 3 in Form einer Beschichtungsschicht u. ä. auf.

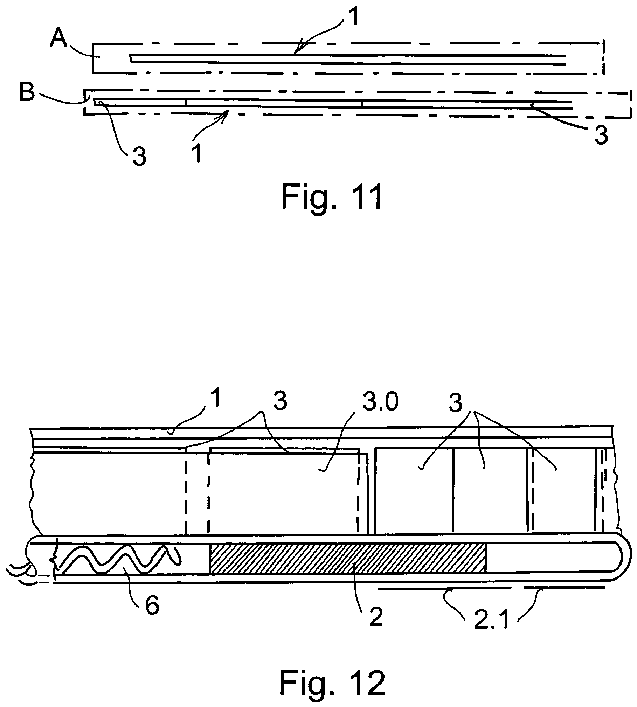

In einer alternativen Ausführung ist mindestens ein Teil von ihr mit einer Randisolierschicht 3.0 überdeckt. In der Nähe der Achse des Körpers 1 oder direkt in ihr ist in der Verschlussplatte 1.3 ein Träger 6.1 mit der gesteuerten Elektrode 6 wasserdicht (mediendicht) befestigt, in der ein Sendegerät 64 in Form einer Stange oder Spirale angeordnet und auf diese Weise in ein Silikat-, Silizium- und/oder Quarz-Glasrohr eingefügt ist. Das Sendegerät 64 ist mit einem Ende zerlegbar oder fest mit der Frequenzquelle 62 verbunden, welche an die Energiequelle 63 angeschlossen ist. Die Energiequelle 63 kann z. B. als Verteilernetz 230V/50Hz oder auch als Photovoltaikmodul, Batterie oder ihre Äquivalente gestaltet sein. Die integrierte gesteuerte Elektrode 6 (Fig. 12) hat an ihrem Ende z. B. eine positiv polarisierte Elektrode 2, die in dem gemeinsamen Silikatrohr angeordnet ist und von der gesteuerten Elektrode 6 durch einen Luftspalt bzw. ein Isoliermaterial mit einer minimalen thermischen Dilatation und/oder ein unpolares elastisches Material abgetrennt ist. Die positiv polarisierte Elektrode 2 ist z. B. aus C, Ag, Au u. ä. gebildet oder besteht ferner aus ihren Mischungen oder Verbindungen mit anderen Elementen. Auf dem Silikatrohr der gesteuerten Elektrode 6 und/oder der positiven Elektrode 2 befindet sich in einer alternativen Ausführung eine Beschichtung, eine Schicht 2.1 mit positivem und/oder negativem elektrochemischen Potential. Auf diese Art kommt das Medium 9 in direkten Kontakt mit der Beschichtung, der Schicht 2.1, und wird ionisiert.

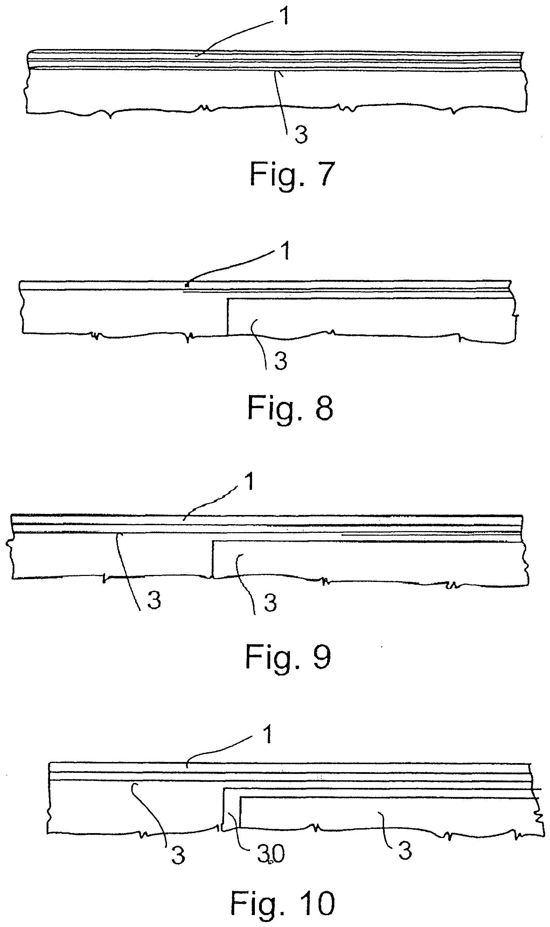

Weitere Ausführungen der gesteuerten Elektrode 6 und der polarisierten Elektrode 2 sowie der negativen Elektrode 3 sind in den Fig. 7 - 12 dargestellt.

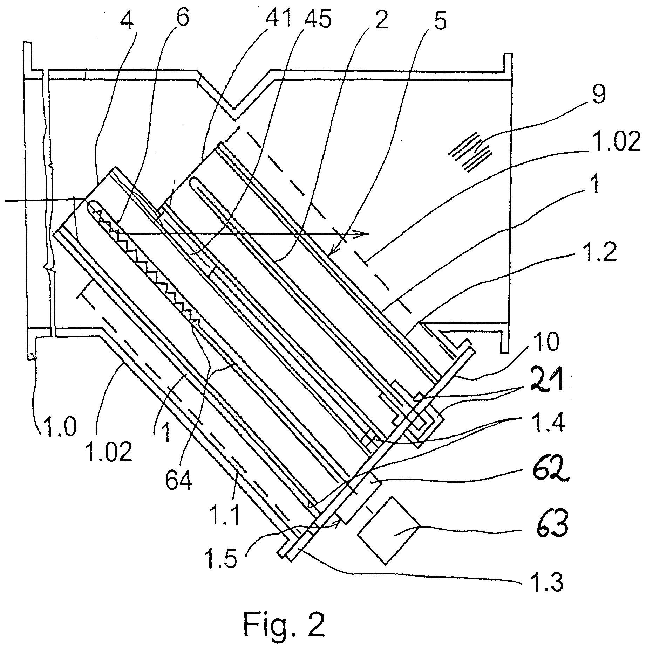

Eine weitere Ausführung (Fig. 2) der allgemeinen Lösung, angeführt in der PCT-Anmeldung WO 2007/045487, sieht vor, dass mindestens ein Teil des Mediums 9 im Körper 1 physikalisch bearbeitet wird, z. B. durch ein elektrochemisches Signal RC AC und verschiedene elektrochemische Potentiale bei der hydrodynamischen Strömung des Mediums 9 bei seiner polarisierenden und/oder nicht polarisierenden Wirkung im Körper 1, welches nachträglich z. B. in einen Schmutzfilter 1.0 eingesetzt wird, der Bestandteil des Rohrsystems ist. Es handelt sich um eine Lösung, bei der die Technologie in einer linearen Strömung des Mediums 9 umgesetzt wird. Die Anregungsvorrichtung 10 für Flüssigkeiten und Gase besteht aus einer Kammer der gesteuerten Elektrode 6 des Körpers 1 und einer Kammer der positiv polarisierten Elektrode 2 des Körpers 1. Die Eingangsöffnung 4 befindet sich in der Achse des integrierten Körpers 1 der Kammer der gesteuerten Elektrode 6. Die Kammer der positiv polarisierten Elektrode 2 hat eine seitliche Ausgangsöffnung 5 sowie eine Hilfseingangsöffnung 41. Die Kammer der gesteuerten Elektrode 6 und die Kammer der positiv polarisierten Elektrode 2 sind im Körper 1 über eine Verbindungsöffnung 45 gegenseitig verknüpft. In der Achse des integrierten Körpers 1 der Kammer der gesteuerten Elektrode 6 ist eine positiv polarisierte Elektrode 2 direkt oder in einem Silikatrohr, vorzugsweise aus technischem Glas, angeordnet. Der Körper 1 besteht aus einem ersten Körper 1.1, der die separate Kammer der gesteuerten Elektrode 6 bildet und aus einem zweiten Körper 1.2, der die separate Kammer der positiv polarisierten Elektrode 2 bildet. Diese Kammern sind gegenseitig durch eine Verschlussplatte 1.3 miteinander verbunden. Das in dem Silikatrohr angeordnete Sendegerät 64 ist fest und/oder zerlegbar mit der Frequenzquelle 62 verbunden, welche an die Energiequelle 63 angeschlossen ist. Ähnlich wie die gesteuerte Elektrode 6 ist auch die positiv polarisierte Elektrode 2 über einen Träger 21 am Körper 1 in der Verschlussplatte 1.3 angeordnet, die an dem Flansch zerlegbar befestigt ist. Der Körper 1 ist mit Schlammöffnungen 1.4 und einer äußeren verschließbaren Abflussöffnung 1.5 versehen. Am Umfang eines derart ausgeführten Körpers 1 ist ein Zylinderfilter 1.02 angeordnet.

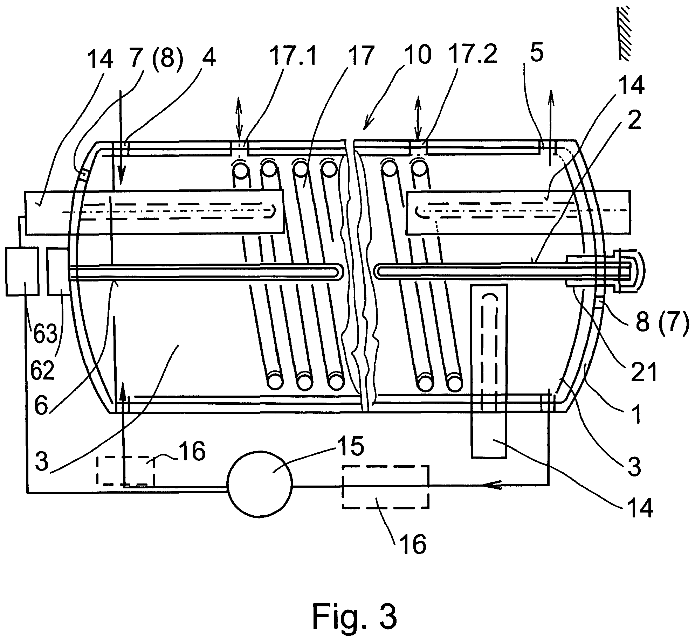

Die Lösung für die Bearbeitung des Mediums 9 mit mehrfachem Durchgang durch die Anregungsvorrichtung 10 mit hydraulischem und elektrischem Anschluss, durch die man eine Erwärmung erreicht, ist ausführlich in Fig. 3 dargestellt. Der Körper 1 weist mindestens eine gesteuerte Elektrode 6 und mindestens eine positiv polarisierte Elektrode 2 auf. An der Innenfläche des Körpers 1, falls er aus einem Isoliermaterial hergestellt ist, befindet sich in dieser Ausführung eine negative Elektrode 3. In einer alternativen polarisierten Ausführung hat der Körper 1 eine Randisolierschicht 3.0 am Innenumfang oder nur an einem Teil (siehe rechten und linken Teil des Körpers 1). Im Innenraum des Körpers 1 ist mindestens ein konventionelles Heizmodul 14 wasserdicht angeordnet bzw. mindestens ein Wärmeaustauscher 17. Die gesteuerte Elektrode 6 ist mit der Frequenzquelle 62 verbunden, welche an die Energiequelle 63 angeschlossen ist. Die Energiequelle 63 ist mit einer Transportfördereinrichtung 15 des Mediums 9 und einem konventionellen Heizmodul 14 und deren Äquivalenten (Laser, Induktionserwärmung u. ä.) elektrisch verbunden. Die Transportfördereinrichtung 15 ist mit ihrem Ausgang mit dem Innenraum des Körpers 1 an Stellen verbunden, an denen mindestens eine gesteuerte Elektrode 6 angeordnet ist. Der Eingang in die Transportfördereinrichtung 15 aus dem Raum des Körpers 1 erfolgt an Stellen, an denen sich mindestens eine positiv polarisierte Elektrode 2 befindet, die im Träger 21 angeordnet ist. Der Innenraum des Körpers 1 verfügt über einen Wärmeaustauscher 17 mit einer Eingangsöffnung 17.1 und einer Ausgangsöffnung 17.2. Diese Öffnungen können auch eine kinematische Umkehr sein. Es handelt sich um Eingangs-Ausgangs-Öffnungen. In einer alternativen Lösung kann vor und/oder hinter der Transportfördereinrichtung 15 eine sekundäre Anregungsvorrichtung 16 angeschlossen werden. Der Körper 1 verfügt über eine verschließbare Luft-Gasabführung 7 und eine verschließbare Schlammabführung 8. Falls der Körper 1 horizontal angeordnet ist, befinden sich diese Öffnungen an der oberen und unteren Wand des Körpers 1. Die angeführte Anregungsvorrichtung 10, dargestellt in Fig. 3 ohne hydraulischen Anschluss bzw. ohne Wärmeaustauscher 17 und Heizmodul 14, kann zur Bearbeitung des Mediums 9 verwendet werden, und zwar mit einmaligem Durchgang des Mediums 9 vor den physikalischen, chemischen, biochemischen, biologischen und anderen Technologien.

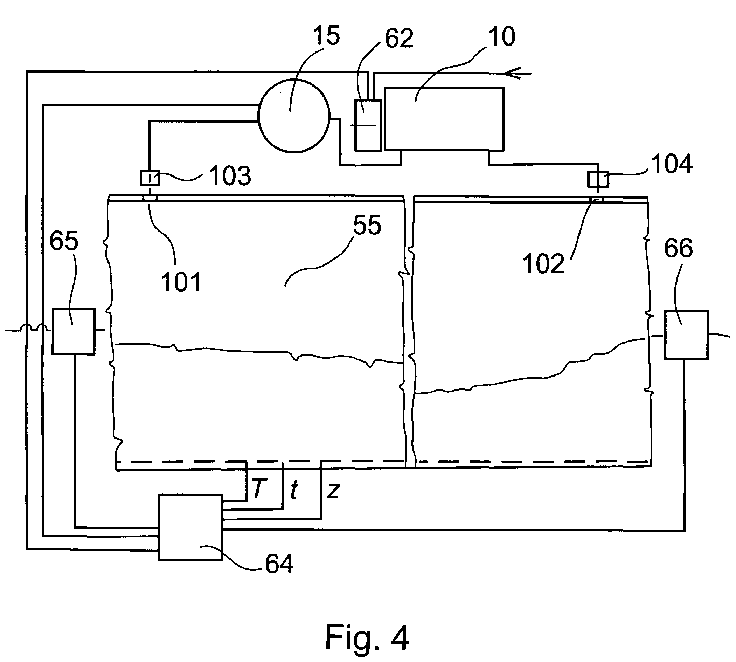

Eine weitere Ausführung der Anregungsvorrichtung 10 ist in Fig. 4 dargestellt. Sie zeigt eine Anordnung an einer Rohrleitung mit großem Durchmesser für den Transport großer Mengen des Mediums 9 bei einer Minimierung der Ausführungszeit. Die hydrodynamische Kammer 55 bildet einen Teil der Rohrleitung 100, auf die eine Eingangsöffnung 102 und Ausgangsöffnung 101 wasserdicht angepasst werden. Es ist vorteilhaft, auf diese Öffnungen Verschluss- und Öffnungsvorrichtungen 103 und 104 zu installieren. Auf der Ausgangsöffnung 101 ist die Verschluss- und Öffnungsvorrichtung 103 für das Medium 9 angeordnet. Die Transportfördereinrichtung 15 ist an den Eingang der Anregungsvorrichtung 10 angeschlossen, deren Ausgangsrohrleitung mit der Eingangsöffnung 102 über die Verschluss- und Öffnungsvorrichtung 104 verbunden ist. Die elektronische Frequenzquelle 62 ist einerseits mit der gesteuerten Elektrode 106 und der Energiequelle 63 verbunden und andererseits mit dem Steuermodul 64. Das Steuermodul 64 ist an die Transportfördereinrichtung 15 angeschlossen sowie an einen ersten elektronischen kontinuierlichen oder in Schritten arbeitenden Schließer/Öffner 65 sowie einen zweiten Schließer/Öffner 66. Die Frequenzquelle 62 ist an die Energiequelle 63 für Wechsel- oder Gleichstrom angeschlossen. Das Steuermodul 64 ist zum Beispiel mit einem ersten Messgerät T (z. B. für Temperatur), einem zweiten Messgerät t (z. B. für Druck) und einem letzten Messgerät z (z .B. für Leitfähigkeit, pH u. ä.) verbunden. Die Transportfördereinrichtung 15 ist vorzugsweise eine Pumpe jeder Art und ihre Äquivalente, aber im Falle von Gasen auch Saugpumpe, Ventilator, Kompressor und deren Äquivalente. Die Variante des angeführten Anschlusses mit niedrigerem technischen Niveau verfügt über keinen ersten und zweiten kontinuierlichen oder in Schritten arbeitenden Schließer/Öffner 65, 66.

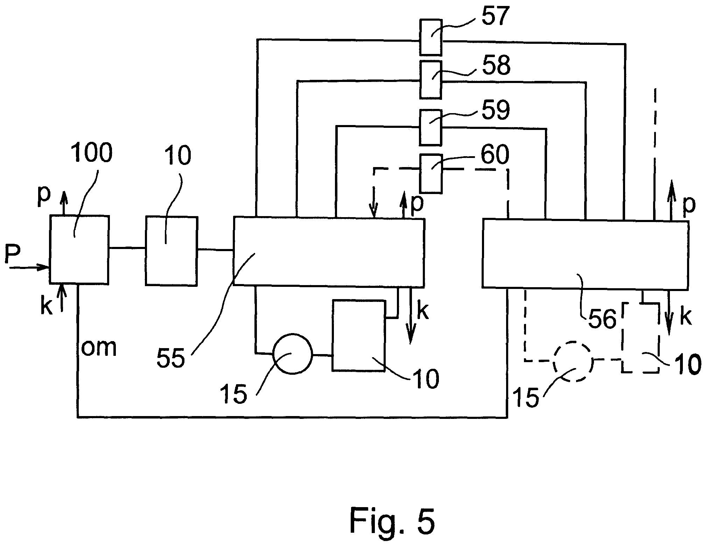

Ein weiteres Anschlussschema von zwei Anregungsvorrichtungen 10 im System der Wärmeerzeugung mit einem Kessel 100 wird in Fig. 5 dargestellt. Die erste Anregungsvorrichtung 10 ist über eine Rohrleitung mit der hydrodynamischen Kammer 55 verbunden, die in einer konkreten Ausführung eine Mischvorrichtung bzw. einen Druckregler oder deren Äquivalent bildet. Auf diese Weise ist an die Verbindungsrohrleitung die Transportfördereinrichtung 15 des Mediums 9 angeschlossen. Vor dem Kessel 100 kann, muss aber nicht, eine Anregungsvorrichtung 10 installiert werden, nur in dem Fall, wenn die hydrodynamische Kammer 55 von dem Kessel 100 entfernt angeordnet ist. Der Kessel 100 hat einen Eingang P des hinzukommenden Mediums 9, einen Ausgang des Heizmediums OM und für gewöhnlich einen Gasausgang p sowie einen Schlammausgang k und einen Ausgang für Unreinheiten. Der Ausgang aus dem Kessel 100 ist mit der Verteilerkammer 56 verbunden, deren Ausgang mit einem ersten technologischen Block 57, z. B. Heizblock, verbunden ist. Der zweite Ausgang ist mit einem zweiten technologischen Block 58 verbunden, z. B. einem Solvatblock für eine Biowaschanlage mit chemischer Reinigung. Ein dritter Ausgang aus der Verteilerkammer 56 ist mit einem dritten technologischen Block 59, z. B. für eine Poolwassererwärmung, verbunden. Die technologischen Blöcke 57, 58, 59, 60 usw. sind je nach Bedarf des Ganzen, z. B. eines Hotels, Bürogebäudes, von Produktionshallen u. ä., ausgestattet. Die hydrodynamische Kammer 55 und die Verteilerkammer 56 weisen auch die Ausgänge p und k auf. Der letzte technologische Block 60 ist der letzte Ausgang, der mit der Verteilerkammer 56 verbunden ist, und sein Ausgang ist mit der hydrodynamischen Kammer 55 über eine Mischvorrichtung bzw. ihre Äquivalente verbunden.

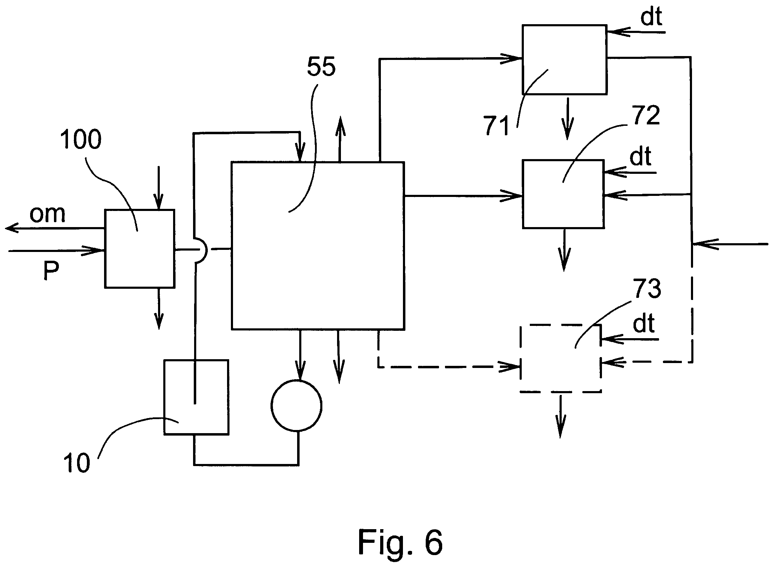

Die Fig. 6 zeigt einen allgemeinen Anschluss der Anregungsvorrichtung 10 mit einer hydrodynamischen Kammer 55, die mit einem Ausgang mit dem Kessel 100 verbunden ist. Die hydrodynamische Kammer 55 ist mit ihrem ersten Ausgang mit dem physikalischen Block 71, mit ihrem zweiten Ausgang mit dem chemischen Block 72 und mit dem letzten Ausgang z. B. mit dem biologischen Block 73 verbunden. Selbstverständlich kann es von diesen angeführten technologischen Blöcken 71, 72, 73 auch mehr geben. Falls das Medium 9 Erdöl bildet, kann der Block 71 physikalisch sein, der Block 72 ein Raffinierungsblock bzw. der Block 73 ein Verdampfungs-, Destillationsblock usw. sein. Die Ausführung der negativen Elektrode 3 kann jeglicher Art sein je nach Art des bearbeiteten Mediums 9 (anionisch oder kathionisch), welches flüssig oder gasförmig sein kann.

Die allgemeine Lösung bildet eine Schicht, eine Beschichtung am ganzen Umfang der Kammer des Körpers 1 entlang (Fig. 7).

Die Fig. 8 zeigt eine Lösung, bei der mindestens ein Teil des Körpers 1 mit der Elektrode 3 bzw. mit dem positiven und/oder negativen elektrochemischen Potential gleich Null abgedeckt ist.

Die Ausführung der Elektrode 3, bei der zwei Schichten mit unterschiedlichen elektrochemischen Potentialen in Flächenkontakt zueinander stehen, ist in Fig. 9 dargestellt.

Eine gleiche Ausführung wie in Fig. 9 ist in Fig. 10 dargestellt, nur mit dem Unterschied, dass sich zwischen den elektrochemischen Potentialen eine Randisolierschicht 3.0 befindet.

Fig. 11 zeigt einen Körper 1 mit einem elektrochemischen Potential gleich Null. Der Körper 1 besteht aus einem Teil, der ein elektrochemisches Potential gleich Null hat oder aus einem Isolierstoff besteht, und Nebenteile mit einem negativen oder positiven elektrochemischen Potential aufweist, die zugleich die Elektrode 3 ersetzen.

Die Fig. 12 zeigt eine integrierte gesteuerte Elektrode 6 und eine polarisierte Elektrode 2, die in einem gemeinsamen Silikatrohr voneinander getrennt angeordnet sind, wobei dieses an seiner Außenfläche mindestens eine Außenbeschichtung aufweist, die Schicht 2.1 mit positivem und/oder negativem elektrochemischen Potential. Die Fig. 12 zeigt weitere mögliche Ausführungsbeispiele der Elektrode 3, deren Schichten sich berühren, voneinander getrennt sind oder sich gegenseitig überdecken.

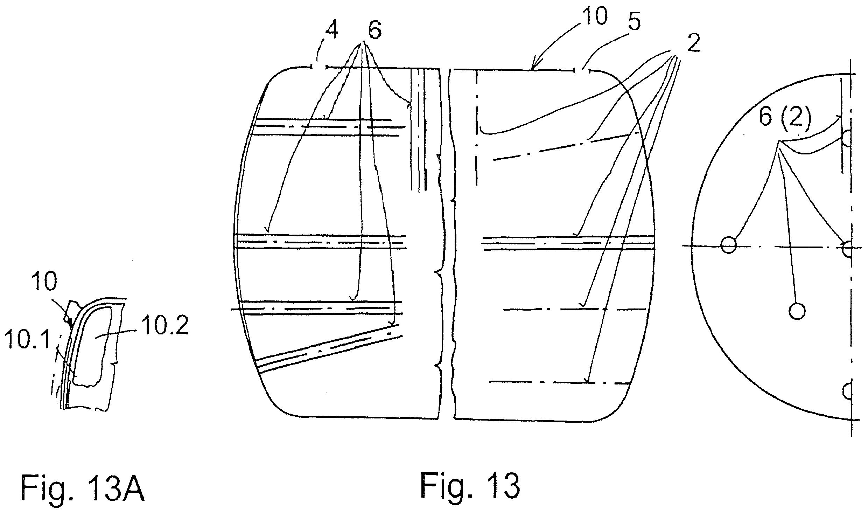

Die Anregungsvorrichtung 10 für Flüssigkeiten und Gase in Form eines Großvolumen-Heizgeräts ist auf einer Seite in der Nähe der Eingangsöffnung 4 mit einer oder mehreren gesteuerten Elektroden 6 und in der Nähe der Ausgangsöffnung 5 mit einer oder mehreren polarisierten Elektroden 2 versehen. Es ist von Vorteil, wenn der Innenraum des Körpers 1 eine Isolierschicht 10.2 aufweist, vorzugsweise dann, wenn der Körper 1 aus einem tragenden leitfähigen Material 10.1 gebildet ist. Es ist von Vorteil, wenn der Körper 1 in diesem Fall an seiner Außenseite mindestens eine technologische Schicht in Form einer Wärmisolierung und/oder einen Rückstrahler für die elektromagnetische Strahlung, z. B. in Form einer Aluminiumfolie u. ä., aufweist (Fig. 13, 13A).

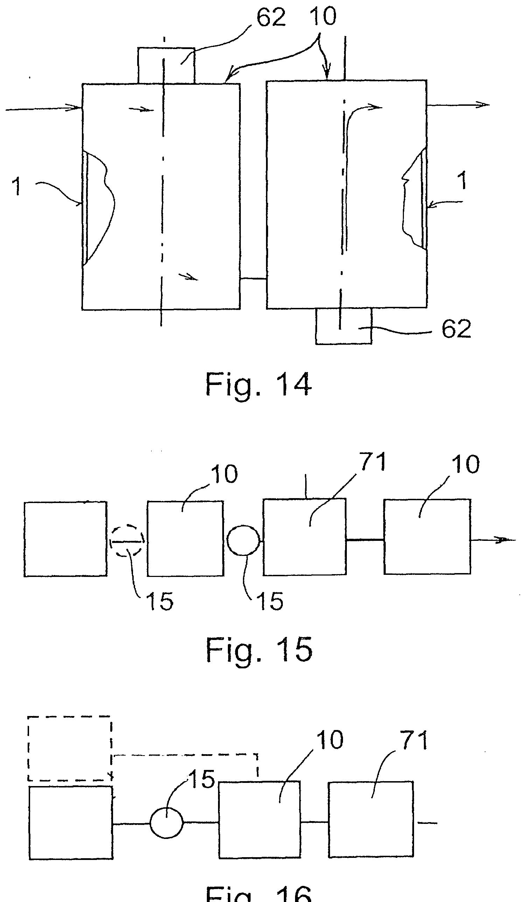

Der mehrfache Durchgang des Mediums durch die Anregungsvorrichtung 10 kann mit Hilfe der Transportfördereinrichtung 15 umgesetzt werden. Eine weitere konkrete Ausführung kann durch die Aneinanderreihung der Anregungsvorrichtungen 10 erzielt werden (Fig. 14). Das Medium 9 mit einem Durchgang durch zwei Anregungsvorrichtungen erhöht seine technologischen Wirkungen.

Die Elektrode 3 ist anionisch oder kathionisch je nach Art des Materials, mit dem sie ionisiert. Die physikalische Flüssigkeit oder das Gas als Medium 9 wird dadurch beeinflusst. In einer alternativen Ausführung weist die Elektrode 3 auf dem anionischen oder kathionischen Material eine Isolierschicht 3.0 auf, wenn sie das Medium 9 polarisiert. Diese Elektrode 3 ist Gegenstand einer weiteren Forschung. Die polarisierte Elektrode 2 kann im Inneren des Silikatrohrs Reagenzgläser aus anionischem oder kathionischem Material aufweisen und ist ebenso Gegenstand der Forschung in Bezug auf ihre Interaktionen mit der chemischen Zusammensetzung, den physikalischen Eigenschaften u. ä. des Mediums 9.

Das Verfahren gemäß der Erfindung ist Gegenstand weiterer Forschungen. Zurzeit kann man zu dem Schluss kommen, dass, falls die Elektrode 3 aus einem Material mit negativem Elektrodenpotential besteht (negatives elektrochemisches Potential - Kathode), z. B. Fe, AI bis Lithium (-3,04V) und deren Verbindungen und Mischungen, im Medium 9 Reduktionsprozesse stattfinden. Diese Ausführungen wurden in der Energiewirtschaft getestet. Falls die Elektrode 3 aus einem Material mit positivem Elektrodenpotential besteht (positives elektrochemisches Potential - Anode), z. B. Cu, Ag bis Gold (1,55V) und deren Verbindungen und Mischungen, dann finden im Medium 9 Oxidationsprozesse statt. Diese Ausführungen wurden in Technologien zur Abwasserreinigung, Biogasaufbereitung u. ä. getestet. Ebenso Gegenstand weiterer Forschungen sind auch die polarisierten Elektroden 2, insbesondere deren Interaktionen bei Änderungen im Medium 9. Die polarisierte Elektrode 2 kann im Inneren des Silikatrohrs Reagenzgläser aus anionischem oder kathionischem Material aufweisen und ist ebenso Gegenstand der Forschung in Bezug auf ihre Interaktionen mit der chemischen Zusammensetzung und den physikalischen Veränderungen des Mediums 9.

Neue physikalische und chemische Eigenschaften der Lösung gemäß der Erfindung wurden mit der PO-Methode untersucht, die Gegenstand des SK Patents 279429 ist. Das Ergebnis der Untersuchung ist wie folgt:
- Die Moleküle im Medium sind nach der Behandlung gemäß der Erfindung in der molekularen und intermolekularen Struktur schwächer gebunden; das Medium weist eine erhöhte Fluidität und geänderte Oberflächenspannung auf; beeinflusst im Medium die Entstehung einer elektrischen Doppelschicht; das elektrische und chemische Potential und die Veränderungen der Bedingungen für das elektrische Gleichgewicht beeinflussen den pH-Wert und somit auch die chemischen Zusammensetzungen; die Eigenschaften des behandelten Mediums sind abhängig vom Zeitpunkt der Behandlung, des Wärmeinhalts/Enthalpie, der Absorbierung, die bei den veränderten Eigenschaften von dem im Medium vorkommenden Si gemessen wurde.

Durch experimentelle Messungen wurden Unterschiede in der Verdampfungsgeschwindigkeit und der Erwärmungsgeschwindigkeit sowie eine Senkung des Energieverbrauchs für die Erwärmung und Kühlung desselben Mediums ermittelt.

Angesichts der hohen gemessenen Absorbierung von Wasser, das gemäß der Erfindung aufbereitet wurde, im Vergleich zu Wasser, das nicht aufbereitet wurde, hat der Erfinder nach der Aufbereitung über 30 s. durch einen Laser (am Markt erhältlicher Laserpointer und Laserbatterie) Folgendes festgestellt: Nach 110 Stunden hat er einen Vergleich durchgeführt von:
- destilliertem Wasser, das nicht aufbereitet wurde,
- destilliertem Wasser, das nicht gemäß der Erfindung aufbereitet wurde,
- destilliertem Wasser, das gemäß der Erfindung aufbereitet und durch den Laser beeinflusst wurde.

Es handelte sich um eine Erwärmung einer Volumen-Normalen von 50 °C auf 60 °C mit folgendem Ergebnis: destilliertes Wasser, das nicht mit 4,5 MJ/kg aufbereitet wurde, destilliertes Wasser, das nicht gemäß der Erfindung mit 4,1 MJ/kg aufbereitet wurde und destilliertes Wasser, das gemäß der Erfindung aufbereitet und durch den Laser mit 3,7 MJ/kg beeinflusst wurde.

Das oben Angeführte wurde durch Experimente bei der Abkühlung bestätigt, die eine wesentlich kürzere Zeit bis zum Anfang der Keimbildung für das gemäß der Erfindung aufbereitete Wasser bestätigt haben (durchgeführt durch WSL - Institute for Snow- and Avalanche Research SLF, Davos, Schweiz). Durch die Veränderung der Bindungen zwischen den Molekülen und in den Molekülen können eine optimierte Wärmeübertragung und eine Änderung der Wärmeleitfähigkeit im Medium beobachtet werden. Die benötigte Energie für das Einfrieren kann schneller übertragen werden oder unter einem niedrigeren Temperaturgradienten.
- Messungen wurden durchgeführt für die Verwendung von destilliertem Wasser, das gemäß der Erfindung aufbereitet wurde, für die Elektrolyse von Wasser, wobei eine schnellere Reaktion und eine Senkung der Kosten für die Stromversorgung um 28 % gemessen wurden.
- Tests mit Biogasaufbereitung wurden durchgeführt, wobei es nach der Aufbereitung gemäß der Erfindung zu einer Erhöhung des Heizwertes von Biogas um 17 % kam.

Die Tests wurden mit einem elektromagnetischen Wechselsignal und mit einem elektromagnetischen stetig sinusförmigen Signal, einem kontinuierlichen und einem intermittierenden Signal von 100 - 500 MHz durchgeführt, wobei über eine gesteuerte Elektrode mit einer Leistung von 0,1 bis 100 W, eine polarisierte Elektrode aus technischem Glas und Oxidkeramik mit einem Füllstoff aus Cu, Ag, AI, C, Mg und eine ionisierte Elektrode aus rostfreiem Stahl, Zn, Sn, Fe, Cu, C und Beschichtungen, W-, Cr-, Mo-Schichten, deren Carbiden, Nitriden, Siliciden, mehrschichtigen Strukturen und Verbindungsstrukturen gearbeitet wurde.

Durch das Verfahren gemäß der Erfindung wurde das Methangas beseitigt, das im Brunnenwasser gebunden war, was eine Schwächung der Bindungen bestätigt.

Die Verwendungsmöglichkeiten sind durch die Größe der Änderungen der physikalischen Eigenschaften der Flüssigkeiten und Gase gegeben, die durch die Vorrichtung strömen. Die Änderungen sind proportional zu der Anzahl der Durchgänge durch die elektrochemischen Potentiale bzw. unter Verwendung der gesteuerten Elektrode. Es handelt sich um die Aufbereitungsindustrie von Trink- und Betriebswasser, von technischen Wässern und Abwässern, im Bauwesen, bei der Kurort- und Heilquellenkunde, bei der Reinigung und Wäscherei, in der Lebensmittelindustrie, bei der Herstellung von Alkohol, im Brauwesen, im Gesundheitswesen, in der Dermatologie, in der Keramikherstellung und in der Wärmeerzeugung, der Wärmewirtschaft, bei Abwasserkläranlagen, der Energiewirtschaft, bei Wasserquellen, bei Schwimmbädern u. ä. Auch bei der Aufbereitung in der Erdölindustrie und der Automobilindustrie kann das Verfahren zur Aufbereitung von Flüssigkeiten angewendet werden.

Das Verfahren gemäß der Erfindung interagiert und wirkt auch auf feste Stoffe, die im flüssigen oder gasförmigen Medium vorhanden sind, gezielt oder in Form von Unreinheiten. Die Wirkung mit der Aufbereitung kann im flüssigen oder auch gasförmigen Zustand angewendet werden. Im Gas kann unter anderem eine Feuchtigkeit bis zu einer Flüssigkeit vorhanden sein, und in der Flüssigkeit wiederum kann freies oder gebundenes Gas vorhanden sein. Es handelt sich also auch um die Wirkung auf eine Verbindung eines festen, flüssigen bzw. gasförmigen Mediums, bei dem einmal der flüssige Zustand und ein anderes Mal der gasförmige Zustand überwiegt. Das genannte Verfahren kann im Umweltwesen, insbesondere bei der Verbrennung von festen Brennstoffen, angewendet werden.

## Patentansprüche

1. Verfahren zur physikalischen Bearbeitung und/oder Erwärmung von Medien, insbesondere von Flüssigkeiten, in einem Körper (1) einer Anregungsvorrichtung wobei das Medium (9) ganz oder nur ein Teil davon einer Ionisation und/oder einer Polarisation und gleichzeitig einer elektromagnetischen Wechselwirkung ausgesetzt wird oder mehrmals einer solchen Wirkung ausgesetzt wird, wobei in dem Molekül des Mediums (9) und zwischen seinen Molekülen Kraftbindungen abgeschwächt werden, sich ändern oder in der Übermolekularstruktur schwach gebunden werden, was zu einer Änderung der physikalischen und/oder chemischen Eigenschaften des Mediums (9) führt und sich in der Fluidität, der Oberflächenspannung, der Absorbierung, der Geschwindigkeit der Wärmeaufnahme und -übergabe, dem Wärmeinhalt/Enthalpie je nach Art des Mediums (9) auswirkt,
**dadurch gekennzeichnet,**
**dass** das bearbeitete Medium (9) mit der Wirkung von Laser als einer weiteren Energieart angereichert wird, die entweder direkt im Körper (1) oder außerhalb des Körpers (1) angeordnet ist.

2. Verfahren zur physikalischen Bearbeitung und/oder Erwärmung von Medien, insbesondere Flüssigkeiten, nach Anspruch 1,
**dadurch gekennzeichnet,**
**dass** das Medium (9) als technologische Vorbehandlung für eine weitere Bearbeitung in physikalischen, chemischen, petrochemischen, biotechnologischen Technologien verwendet wird.

3. Verfahren zur physikalischen Bearbeitung und/oder Erwärmung von Medien, insbesondere Flüssigkeiten, nach Anspruch 1 und 2,
**dadurch gekennzeichnet,**
**dass** eine polarisierte Elektrode (2) aus einem Material mit einem positiven elektrochemischen Potential wie z. B. Cu, C bzw. aus einem Material mit einem negativen elektrochemischen Potential wie rostfreiem Stahl, Fe, Al sowie aus weiteren festen, flüssigen oder gasförmigen Werkstoffen, die separat im Inneren einer Silikat- oder Quarzhülle, einem Rohr oder Reagenzglas gelagert sind, gebildet wird.

4. Verfahren zur physikalischen Bearbeitung und/oder Erwärmung von Medien, insbesondere Flüssigkeiten, nach Anspruch 1 und 3,
**dadurch gekennzeichnet,**
**dass** eine ionisierte Elektrode (3) in direkten Kontakt mit dem Medium (9) gebracht wird und aus einem Material mit einem positiven elektrochemischen Potential gebildet wird wie Cu, C bzw. aus einem Material mit einem negativen elektrochemischen Potential wie rostfreiem Stahl, Fe, Al sowie aus weiteren festen Werkstoffen.

5. Verfahren zur physikalischen Bearbeitung und/oder Erwärmung von Medien, insbesondere Flüssigkeiten, nach Anspruch 1 bis 4,
**dadurch gekennzeichnet,**
**dass** das nach Anspruch 1 bearbeitete Medium (9) mit der Wirkung von Wärmeenergie als einer weiteren Energieart angereichert wird, die entweder direkt im Körper (1) oder außerhalb des Körpers (1) angeordnet ist.

6. Verfahren zur physikalischen Bearbeitung und/oder Erwärmung von Medien, insbesondere Flüssigkeiten, nach Anspruch 1 bis 5,
**dadurch gekennzeichnet,**
**dass** auf das hydrodynamisch bearbeitete Medium (9) mit einer elektromagnetisch gesteuerten Elektrode (6) von außerhalb des Körpers (1) eingewirkt wird.

7. Verfahren nach Anspruch 1 bis 6,
**dadurch gekennzeichnet,**
**dass** die hydrodynamisch bearbeitete Flüssigkeit mindestens die Form einer Strömungsauflösung oder Änderungen der Strömungsrichtung, vorzugsweise mit tangential gegen die Strömungsrichtung im Körper (1) angeordneten Eingangs- und Ausgangsöffnungen (4 und 5) aufweist, wobei die positive Elektrode (2) und/oder die negativen Elektroden (3) eine mechanisch geänderte Oberflächenrauigkeit aufweisen.

## Claims

1. A method for physical processing and/or heating of media, in particular of liquids in a body (1) of an excitation device, wherein the medium (9) in its entirety, or only a portion thereof, is subjected to ionization and/or polarization and simultaneously to an electromagnetic interaction or is exposed multiple times to such action, and in the molecule of the medium (9) and between its molecules, force bonds are attenuated, or change, or are weakly bonded in the supermolecular structure, which leads to a change in the physical and/or chemical properties of the medium (9) and is expressed in the fluidity, surface tension, absorption, rate of heat consumption and heat transfer, and thermal content/enthalpy, depending on the type of medium (9),
**characterized in that**
the process medium (9) is enriched by the laser effect as a further type of energy, which is located either directly in the body (1) or outside the body (1).

2. The method for physical processing and/or heating of media, in particular of liquids, of claim 1,
**characterized in that**
the medium (9) is used as a technological pretreatment for a further processing in physical, chemical, petrochemical, and biotechnological technologies.

3. The method for physical processing and/or heating of media, in particular of liquids, of claims 1 and 2,
**characterized in that**
a polarized electrode (2) comprising a material having a positive electrochemical potential, such as Cu, C, or comprises a material having a negative electrochemical potential, such as stainless steel, Fe, Al, and also comprises further solid, liquid or gaseous materials, which are stored separately in the interior of a silicate or quartz casing, a pipe, or a test tube, is formed.

4. The method for physical processing and/or heating of media, in particular of liquids, of claims 1 and 3,
**characterized in that**
an ionized electrode (3) is put into direct contact with the medium (9) and is formed from a material having a positive electrochemical potential, such as Cu, C, or from a material having a negative electrochemical potential, such as stainless steel, Fe, Al, as well as from further solid materials.

5. The method for physical processing and/or heating of media, in particular of liquids, of claims 1 through 4,
**characterized in that**
the medium (9) processed according to claim 1 is enriched with the effect of heat energy as a further type of energy, which is located either directly in the body (1) or outside the body (1).

6. The method for physical processing and/or heating of media, in particular of liquids, of claims 1 through 5,
**characterized in that**
action is exerted on the hydrodynamically processed medium (9) from outside the body (1) by an electromagnetically controlled electrode (6).

7. The method of claims 1 through 6,
**characterized in that**
the hydrodynamically processed liquid has the form at least of a flow dispersal or changes in the flow direction, preferably with input and output openings (4 and 5) located tangentially counter to the flow direction in the body (1), and the positive electrode (2) and/or the negative electrodes (3) have a mechanically altered surface roughness.

## Revendications

1. Procédé de traitement physique et/ou de réchauffement de milieux, particulièrement de liquides au sein d'un corps (1) de dispositif d'excitation dont le mi-lieu (9) est exposé complètement ou partiellement à une polarisation ionique et par la même occasion à une interaction électromagnétique ou est exposé le cas échéant plusieurs fois à un tel effet, où des liaisons de force se ralentissent dans la molécule du milieu (9) et entre les molécules, évoluent ou sont attachées faiblement au sein d'une structure sur-moléculaire ce qui mène à un changement des propriétés physiques et/ou chimiques du milieu (9) et se répercute sur la fluidité, la tension superficielle, l'absorption, la vitesse de l'absorption calorifique et l'échange de la chaleur, la teneur de la chaleur/l'enthalpie selon la nature du milieu (9),
Est caractérisé de sorte que
Le milieu (9) traité est enrichi en qualité d'une forme d'énergie supplémentaire grâce au laser qui est disposée soit directement au sein du corps (1) ou à l'extérieur du corps (1).

2. Procédé de traitement physique et/ou de réchauffement de milieux, particulièrement de liquides correspondant à la revendication 1,
Est caractérisé de sorte que
Le milieu (9) est utilisé en qualité de prétraitement technologique pour un traitement supplémentaire dans les technologies physiques, chimiques, pétrochimiques et biotechnologiques.

3. Procédé de traitement physique et/ou de réchauffement de milieux, particulièrement de liquides correspondant aux revendications 1 et 2,
Est caractérisé de sorte qu'
Une électrode polarisée (2) se compose d'un matérial ayant un potentiel positif électrochimique à titre d'exemple Cu, C ou le cas échéant d'un matérial ayant un potentiel négatif électrochimique comme l'acier inoxydable, Fe, Al et d'autres matériaux fixes, liquides ou bien encore gazeux stockés séparément à l'intérieur d'une gaine en silicate ou en quartz, d'un tube ou d'une éprouvette.

4. Procédé de traitement physique et/ou de réchauffement de milieux, particulièrement de liquides correspondant aux revendications 1 et 3,
Est caractérisé de sorte qu'
Une électrode ionisée (3) est mise en contact directe avec le milieu (9) et se compose d'un matérial ayant un potentiel positif électrochimique comme Cu, C ou le cas échéant d'un matérial ayant un potentiel négatif électrochimique comme l'acier inoxydable, Fe, Al et d'autres matériaux fixes.

5. Procédé de traitement physique et/ou de réchauffement de milieux, particulièrement de liquides correspondant à la revendication 1 jusqu'à 4,
Est caractérisé de sorte que
Le milieu (9) traité selon la revendication 1 est enrichi en qualité d'une forme d'énergie supplémentaire à l'aide de l'énergie thermique disposée soit directement à l'intérieur du corps (1) ou à l'extérieur du corps (1).

6. Procédé de traitement physique et/ou de réchauffement de milieux, particulièrement de liquides correspondant à la revendication 1 jusqu'à 5,
Est caractérisé de sorte qu'
On agisse sur le milieu (9) traité d'une manière hydrodynamique via une électrode (6) commandée d'une manière électromagnétique partant de l'extérieur du corps (1).

7. Procédé correspondant à la revendication 1 jusqu'à 6,
Est caractérisé de sorte que
Le liquide traité d'une manière hydrodynamique présente au minimum la forme d'un décollement du flux ou des changements de la direction du flux dans le corps (1), préférentiellement avec des ouvertures d'entrée et de sortie (4 et 5) disposées tangentiellement contre la direction du flux au sein du corps (1) où l'électrode positive (2) et/ou les électrodes négatives (3) présentent une rugosité de surface modifiée mécaniquement.
